# EUROPÄISCHE PATENTSCHRIFT

(11) **EP 3 064 419 B1**
(45) Veröffentlichungstag und Bekanntmachung des Hinweises auf die Patenterteilung: **27.06.2018**
(21) Anmeldenummer: 16158329.9
(22) Anmeldetag: 02.03.2016
(51) Int. Cl.: B62H 5/00, B62H 5/14, E05B 67/00

(54) **RAHMENSCHLOSS**
FRAME LOCK
ANTIVOL DE CADRE

(30) Priorität: 04.03.2015 DE 102015103170
(43) Veröffentlichungstag der Anmeldung: 07.09.2016
(73) Patentinhaber: ABUS August Bremicker Söhne KG, 58300 Wetter-Volmarstein (DE)
(72) Erfinder:
(74) Vertreter: Manitz Finsterwald Patentanwälte PartmbB

(56) Entgegenhaltungen:
- EP-A1- 1 418 302
- EP-A1- 1 717 135
- WO-A1-90/02074
- DE-U1-202014 006 369

## Beschreibung

Die vorliegende Erfindung betrifft ein Rahmenschloss für ein Zweirad, insbesondere ein Fahrrad, mit einem Sperrriegel, insbesondere einem Rundbügel, welcher zwischen einer Schließstellung und einer Öffnungsstellung verstellbar ist, einer Klobenaufnahme für einen Kloben eines Sicherungsseils, und einem quer zur Einführrichtung des Klobens zwischen einer Verriegelungsstellung und einer Freigabestellung verschiebbar gelagerten Sicherungselement, das in einer in die Klobenaufnahme mündenden Ausnehmung aufgenommen und in Richtung der Verriegelungsstellung vorgespannt ist, wobei in der Verriegelungsstellung das Sicherungselement in die Klobenaufnahme hineinragt und in der Freigabestellung aus der Klobenaufnahme zumindest teilweise zurückgezogen ist, um den in der Klobenaufnahme aufgenommenen Kloben wahlweise gegen eine Entnahme zu sichern oder für eine Entnahme freizugeben.

Ein derartiges Rahmenschloss ist üblicherweise an dem Rahmen eines Zweirads montiert. In der Schließstellung durchquert der Rundbügel ein Speichenrad des Zweirads. Dadurch ist das Speichenrad blockiert und das Zweirad ist gegen einen unbefugten Gebrauch gesichert. In der Klobenaufnahme kann außerdem ein Sicherungsseil an dem Rahmenschloss befestigt werden, welches ein zusätzliches Sichern des Zweirads an einem Befestigungspunkt, beispielsweise an einem Laternenpfosten, gestattet. Dadurch ist das Zweirad nicht nur aufgrund des Eingriffs des Rundbügels in das Speichenrad gegen ein unbefugtes Wegfahren gesichert, sondern das Zweirad kann auch nicht von dem Befestigungspunkt entfernt, beispielsweise weggetragen, werden.

Es hat sich herausgestellt, dass bei einem in die Klobenaufnahme aufgenommenen und durch das Sicherungselement gegen eine Entnahme gesicherten Kloben unter Umständen durch manipulative Zugbelastung das Sicherungselement entgegen der Vorspannung entriegelt und sodann der Kloben von Hand aus der Klobenaufnahme herausgezogen werden kann, ohne dass eine Öffnungsbetätigung des Sperrriegels, beispielsweise eine Betätigung eines Schließzylinders, durch die über eine entsprechende Kopplungsmechanik üblicherweise auch eine Freigabebetätigung des Sicherungselements erfolgt, vorgenommen worden wäre. Durch manipulatives Verhalten können unter Umständen Kräfte erzeugt werden, die größer sind als die Zuhaltekraft einer das Sicherungselement in die Verriegelungsstellung vorspannenden Feder, so dass der Klobenriegel hierdurch in Richtung der Freigabestellung verschoben werden kann.

In dem Dokument DE 20 2014 006 369 U1 ist ein Rahmenschloss mit den Merkmalen des Oberbegriffs des Anspruchs 1 offenbart.

Eine Aufgabe der Erfindung besteht deshalb darin, ein Rahmenschloss der eingangs genannten Art anzugeben, an dem ein Kloben eines Sicherungsseils zuverlässig gesichert werden kann.

Diese Aufgabe wird durch ein Rahmenschloss mit den Merkmalen des Anspruchs 1 gelöst, und insbesondere dadurch, dass das Sicherungselement in Einführrichtung spielbehaftet in der Ausnehmung aufgenommen und eine durch Formschluss wirkende Blockiereinrichtung vorgesehen ist, um, insbesondere lediglich oder zumindest, in einer entgegen der Einführrichtung liegenden Anlageposition des Sicherungselements in der Ausnehmung ein den Kloben freigebendes Verschieben des Sicherungselements aus der Verriegelungsstellung in die Freigabestellung zu blockieren.

Erfindungsgemäß ist das Sicherungselement also spielbehaftet in der Ausnehmung aufgenommen. Um dies zu gewährleisten, ist insbesondere vorgesehen, dass in Einführrichtung die Erstreckung der Ausnehmung größer ist als die Erstreckung des Sicherungselements. In der Position, in der das Sicherungselement entgegen der Einführrichtung in der Ausnehmung anliegt, wie es bei einer Zugbelastung des Klobens entgegen der Einführrichtung des Klobens der Fall ist, kann das Sicherungselement nicht aus der Verriegelungsstellung in die Freigabestellung bewegt werden, da dann das Sicherungselement aufgrund der Blockiereinrichtung zumindest nicht weit genug in die Ausnehmung bewegt kann. Der Kloben kann nicht aus der Klobenaufnahme entnommen werden. In einer von dieser Anlageposition abweichenden Position des Sicherungselements hingegen, die üblicherweise bei einer regulären Freigabebetätigung des Sicherungselements vorliegt, steht die Blockiereinrichtung einem Einschieben in die Ausnehmung nicht entgegen, und der Kloben kann aus der Klobenaufnahme entnommen werden. Die vorliegende Erfindung macht daher in vorteilhafter Weise von einer Blockiereinrichtung Gebrauch, die selektiv unter Zugbelastung des Klobens wirksam ist, um ein den Kloben freigebendes manipulatives Verschieben des Sicherungselements aus der Verriegelungsstellung in die Freigabestellung zu blockieren.

Die Blockiereinrichtung umfasst einen an dem Sicherungselement, insbesondere an der entgegen der Einführrichtung gerichteten Seite des Sicherungselements, ausgebildeten Blockiervorsprung, der in der Verriegelungsstellung in der entgegen der Einführrichtung liegenden Anlageposition des Sicherungselements einen ortsfesten Anschlag hintergreift, um ein den Kloben freigebendes Verschieben des Sicherungselements aus der Verriegelungsstellung in die Freigabestellung zu blockieren. In der entgegen der Einführrichtung liegenden Anlageposition kann der Blockiervorsprung nicht an dem ortsfesten Anschlag vorbeigleiten, sondern sitzt auf diesem auf, und blockiert daher das Einschieben des Sicherungselements in die Ausnehmung. In einer von dieser Anlageposition abweichenden Position hingegen kann der Blockiervorsprung an dem Anschlag vorbei in die Ausnehmung abtauchen, und das Sicherungselement kann in die Freigabestellung verschoben werden.

Zusätzlich kann für den Fall einer manipulativen Druckbelastung vorgesehen sein, dass die Blockiereinrichtung auch dazu ausgebildet ist, in einer in Einführrichtung liegenden Anlageposition des Sicherungselements in der Ausnehmung ein den Kloben freigebendes Verschieben des Sicherungselements aus der Verriegelungsstellung in die Freigabestellung zu blockieren. Die Blockiereinrichtung kann hierzu einen weiteren an dem Sicherungselement, insbesondere an der in Einführrichtung gerichteten Seite des Sicherungselements, ausgebildeten Blockiervorsprung umfassen, der in der Verriegelungsstellung in der in Einführrichtung liegenden Anlageposition des Sicherungselements einen weiteren ortsfesten Anschlag hintergreift, um ein den Kloben freigebendes Verschieben des Sicherungselements aus der Verriegelungsstellung in die Freigabestellung zu blockieren.

Grundsätzlich können an der entgegen der Einführrichtung gerichteten Seite des Sicherungselements - anstelle des Blockiervorsprungs - insbesondere eingestanzte Rillen vorgesehen sein, um in einer entgegen der Einführrichtung liegenden Anlageposition des Sicherungselements in der Ausnehmung ein den Kloben freigebendes Verschieben des Sicherungselements aus der Verriegelungsstellung in die Freigabestellung zu blockieren. Insbesondere können Stanzgrate formschlüssig mit einer die Ausnehmung umgebenden Wand zusammenwirken, sich insbesondere darin verhaken bzw. verkrallen.

Bevorzugt ist der Blockiervorsprung stufenförmig ausgebildet. Der Blockiervorsprung kann demnach einen Absatz bilden, der bei Kontakt mit dem ortsfesten Anschlag eine Verschiebebewegung des Sicherungselements mit hoher Zuverlässigkeit unterbinden kann.

Vorzugsweise weist der Blockiervorsprung eine Höhe von maximal 1 mm, bevorzugt von maximal 0,5 mm, besonders bevorzugt von maximal 0,3 mm, auf. Bei einer vergleichsweise geringen Höhe kann sich ein Sicherungselement, das sich bei einer regulären Freigabebetätigung, ohne Zugbelastung an dem Kloben, zufällig in der Anlageposition entgegen der Einführrichtung befindet, bei geringsten Bewegungen oder Erschütterungen des Rahmenschlosses aus dieser Anlageposition herausbewegen, so dass der Komfort für den Benutzer beim Entsperren des Rahmenschlosses nicht beeinträchtigt wird, dieser allenfalls ein kurzzeitiges Haken bemerken wird.

Nach einer Ausgestaltung der Erfindung ist in der Verriegelungsstellung des Sicherungselements der Blockiervorsprung außerhalb der Ausnehmung und innerhalb der Klobenaufnahme, insbesondere in eine in dem Kloben ausgebildete Ringnut eingreifend, angeordnet. Hierdurch wird eine fertigungstechnisch besonders einfache Realisierung ermöglicht. Grundsätzlich ist es jedoch auch möglich, dass der Blockiervorsprung auch in der Verriegelungsstellung des Sicherungselements innerhalb der Ausnehmung angeordnet ist und beispielsweise in einen Rücksprung eingreift, der entlang der Verschieberichtung des Sicherungselements in einer die Ausnehmung umgebenden Wand ausgebildet ist.

Der Blockiervorsprung kann im Bereich der Kontaktfläche des Sicherungselements mit einer korrespondierenden Ringfläche einer in dem Kloben ausgebildeten Ringnut vorgesehen sein. Angelehnt an eine im Querschnitt üblicherweise kreisrunde Ausbildung des Klobens kann der Blockiervorsprung in Richtung der Einführrichtung betrachtet teilkreisring- oder sichelförmig ausgebildet sind.

Vorzugsweise ist das Sicherungselement als ein Flachteil aus Blech gefertigt und weist an der in Richtung der Einführrichtung gerichteten Seite eine dem Blockiervorsprung gegenförmig ausgebildete Einbuchtung auf. Ein derartig ausgebildetes Sicherungselement entsteht, wenn der Blockiervorsprung durch Stanzen des Sicherungselements und damit auf besonders einfache Weise hergestellt wird.

Der ortsfeste Anschlag für den Blockiervorsprung kann als Teil einer die Ausnehmung umgebenden Wand ausgebildet sein. Grundsätzlich ist es jedoch auch möglich, dass ein separates Element vorgesehen ist, das in die Ausnehmung hineinragt, um den ortsfesten Anschlag für den Blockiervorsprung zu bilden.

Besonders bevorzugt ist es, wenn der ortsfeste Anschlag durch den Öffnungsrand der Ausnehmung in der Klobenaufnahme gebildet ist, der bei dem Rahmenschloss ohnehin vorhanden ist. Es ist dann nicht erforderlich, einen separaten Anschlag vorzusehen.

Weitere vorteilhafte Ausführungsformen der Erfindung sind in den Unteransprüche, den Zeichnungen und der Figurenbeschreibung angegeben.

Die Erfindung wird nachfolgend beispielhaft unter Bezugnahme auf die Zeichnung beschrieben. Es zeigen
- Fig. 1: ein erfindungsgemäßes Rahmenschloss mit einem Rundriegel und einem Sicherungselement zum Sichern eines Klobens eines Sicherungsseils in einer Klobenaufnahme in einer Schnittdarstellung,
- Fig. 2: das Rahmenschloss aus Fig. 1 in einer perspektivischen Ansicht, wobei im Wesentlichen lediglich die für die Betätigung des Rundriegels und des Sicherungselements erforderliche Mechanik dargestellt ist und die übrigen Bestandteile des Rahmenschlosses weggelassen sind,
- Fig. 3: das Sicherungselement aus Fig. 1 in zwei verschiedenen Ansichten, und
- Fig. 4: eine Detailansicht des Rahmenschlosses aus Fig. 1 im Bereich des Sicherungselements.

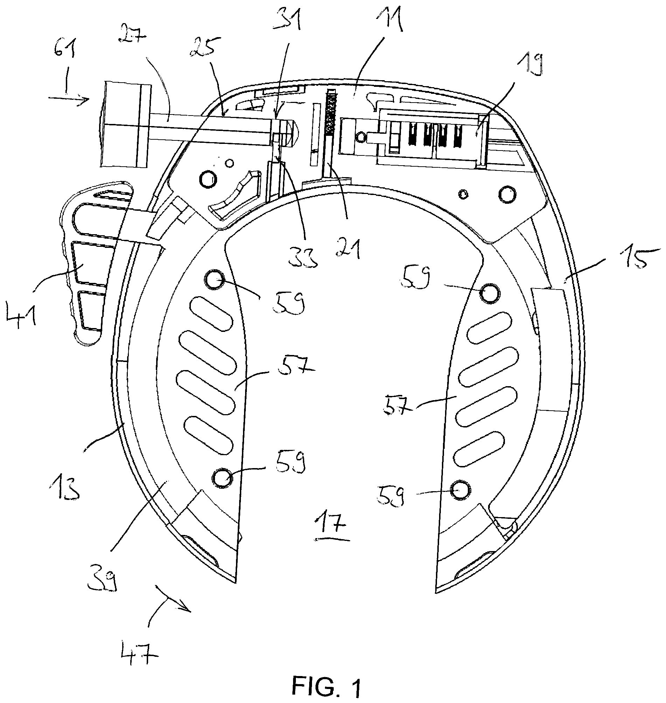

Das in den Fig. 1 bis 4 gezeigte Rahmenschloss wird in der Regel an die Hintergabel eines Fahrrads montiert. Dort ermöglicht das Rahmenschloss ein Blockieren des hinteren Speichenrads des Fahrrads, um eine unbefugte Fahrt mit dem Fahrrad zu verhindern.

Das Rahmenschloss besitzt ein Gehäuse mit einem Basisabschnitt 11, an den sich ein Lagerschenkel 13 und ein Aufnahmeschenkel 15 des Gehäuses anschließen. Der Lagerschenkel 13 und der Aufnahmeschenkel 15 bilden gemeinsam im Wesentlichen eine Hufeisenform, und sie umschließen einen Schließbereich 17 des Rahmenschlosses. In diesen ragt ein Teil des Hinterrads hinein, falls das Rahmenschloss - wie erläutert - an der Hintergabel eines Fahrrads montiert ist.

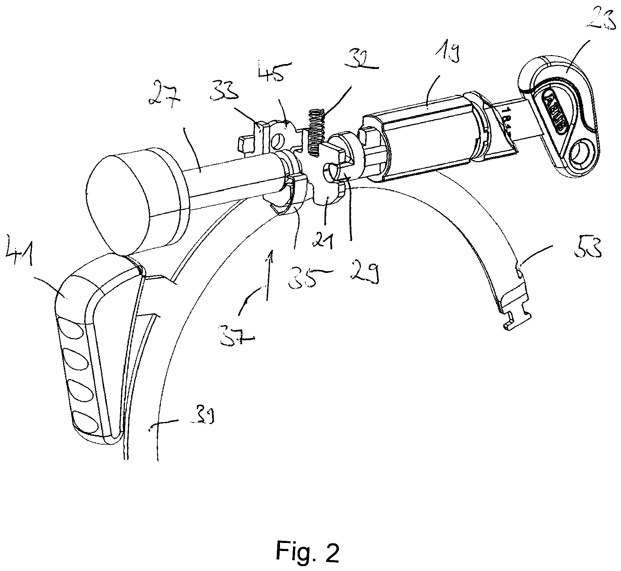

Innerhalb des Basisabschnitts 11 ist ein Schließzylinder 19 angeordnet, der mit einem Bügelriegel 21 gekoppelt ist. Der Schließzylinder 19 und somit der Bügelriegel 21 können mittels eines Schlüssels 23 (Fig. 2) betätigt werden.

Ferner ist innerhalb des Basisabschnitts 11 eine im Wesentlichen hohlzylindrische Klobenaufnahme 25 ausgebildet. In diese ragt ein Kloben 27 eines nicht weiter dargestellten Sicherungsseils ein, der an seiner Vorderseite mit einer Ringnut 31 versehen ist. Grundsätzlich kann der Kloben 27 mit seiner Vorderseite an einer Auswurffeder anliegen, die an der Stirnseite der Klobenaufnahme 25 dauerhaft befestigt, beispielsweise verschweißt oder vernietet ist.

Ein Sicherungselement 33 in Form eines Klobenriegels 33 greift in die Klobenaufnahme 25 und dort in die Ringnut 31 des Klobens 27 ein. Der Klobenriegel 33 ist mittels einer Blattfeder 35 (Fig. 2) entlang einer Vorspannrichtung 37 (Fig. 2) vorgespannt.

Innerhalb des Lagerschenkels 13 befindet sich ein Rundbügel 39. An dem Rundbügel 39 ist eine Handhabe 41 dauerhaft befestigt, beispielsweise verschweißt. Die Handhabe 41 ragt durch einen seitlichen Führungsschlitz (in den Figuren nicht ersichtlich) aus dem Lagerschenkel 13 heraus. In Fig. 1 ist der Rundbügel 39 in einer Öffnungsstellung gezeigt.

In einer nicht gezeigten Schließstellung des Rundbügels 39 ragt ein Ende des Rundbügels 39 in den Basisabschnitt 11 hinein, und das andere Ende erstreckt sich quer durch den Schließbereich 17, so dass seine Spitze innerhalb des Aufnahmeschenkels 15 aufgenommen wird. An dem in der Schließstellung in den Basisabschnitt 11 hineinragenden Ende des Rundbügels 39 ist außerdem eine Sperrnut 53 (Fig. 2) ausgebildet, in die der Bügelriegel 21 in der Schließstellung eingreift. Ferner kann dieses Ende mit einer Zugfeder verbunden sein, die den Rundbügel 39 entgegen der Schließrichtung 47 vorspannt.

Das gezeigte Rahmenschloss ist außerdem mit Versteifungsflächen 57 versehen. Ferner sind Verbindungsnieten 59 dargestellt, die einen oberen und einen unteren Gehäuseteil miteinander verbinden (in den Figuren nicht detailliert gezeigt), die die weiteren Komponenten des Rahmenschlosses umschließen.

Das in Fig. 1 gezeigte Rahmenschloss dient generell dazu, das in dem Schließbereich 17 befindliche Speichenrad wahlweise blockieren zu können, nämlich indem der Rundbügel 39 den Schließbereich 17 durchquert und somit zwischen zwei benachbarten Speichen des Speichenrads verläuft. Um ein derartig blockiertes Speichenrad wieder freizugeben, wird der Rundbügel 39 von der Schließstellung entgegen der Schließrichtung 47 in die in Fig. 1 gezeigte Öffnungsstellung bewegt.

Zu diesem Zweck wird der Schließzylinder 19 mittels des Schlüssels 23 drehbetätigt. Diese Drehbetätigung wird, wie in Fig. 2 dargestellt ist, über eine Exzenterkopplung in eine Schiebebewegung des Bügelriegels 21 gegen die Kraft einer Spiralfeder 32 (Fig. 2) umgewandelt, so dass der Bügelriegel 21 aus der Sperrnut 53 des Rundbügels 39 herausgezogen wird. Der somit freigegebene Rundbügel 39 kann dann durch die vorgenannte Zugfeder in Richtung des Aufnahmeschenkels 15 gezogen werden, so dass der Rundbügel 39 den Schließbereich 17 freigibt.

Falls nachfolgend der Rundbügel 39 wieder in die Schließstellung überführt werden soll, wird der Rundbügel 39 mittels der Handhabe 41 entgegen der Zugkraft der vorgenannten Zugfeder in Schließrichtung 47 bewegt. In der somit eingenommenen Schließstellung wird der Rundbügel 39 gesichert, indem der Bügelriegel 21 wieder in die Sperrnut 53 eingreift.

Zusätzlich zu dem erläuterten Blockieren des Schließbereichs 17 ermöglicht das in Fig. 1 gezeigte Rahmenschloss das Sichern oder Fixieren des Klobens 27 an dem Rahmenschloss. Dadurch kann das Fahrrad mittels des Sicherungsseils beispielsweise an einem Befestigungspunkt, wie einem Laternenpfosten, gesichert werden. Für diese zusätzliche Sicherungsfunktion wird der Kloben 27, während der Rundbügel 39 sich in der Schließstellung befindet, entlang einer Einführrichtung 61 in die Klobenaufnahme 25 eingeführt. Am Ende dieses Einführvorgangs verdrängt der Kloben 27 mit seinem konischen Vorderende kurzzeitig den Klobenriegel 33 entgegen der Vorspannrichtung 37, und eventuell muss der Druck der vorgenannten, optionalen Auswurffeder überwunden werden. Sobald der Kloben 27 vollständig in die Klobenaufnahme 25 eingeführt worden ist, schnappt der Klobenriegel 33 aufgrund der von der Blattfeder 35 ausgeübten Zugkraft zurück in die Klobenaufnahme 25 und steht somit in Eingriff mit der Ringnut 31. Der Klobenriegel 33 befindet sich nun in seiner Verriegelungsstellung, und der Kloben 27 ist innerhalb der Klobenaufnahme 25 fixiert.

Wie aus Fig. 2 ersichtlich ist, wird durch ein Drehbetätigung des Schließzylinders 19 ein exzentrischer Antriebsfortsatz 29 (Fig. 2) eines Zylinderkerns um die Zylinderachse gedreht. Der Antriebsfortsatz 29 ist mit dem Bügelriegel 21 gekoppelt, der - wie vorstehend erläutert - zur Verriegelung des Rundriegels 39 dient. Der Bügelriegel 21 ist über ein als Wippe gelagertes Koppelelement 45 (Fig. 2) mit dem Klobenriegel 33 gekoppelt, der - ebenfalls wie vorstehend erläutert - zur Verriegelung des Klobens 27 dient.

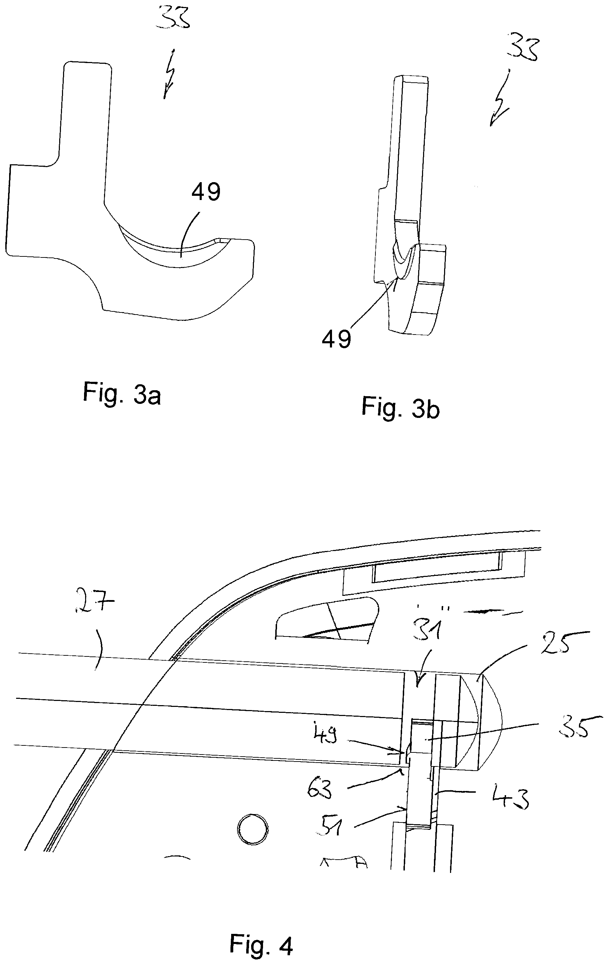

Der Klobenriegel 33 ist in einer quer, insbesondere senkrecht, zur Einführrichtung 61 verlaufenden Ausnehmung 43 (Fig. 4) für den Klobenriegel 33, die in die Klobenaufnahme 25 mündet, verschiebbar gelagert. Dabei ist der Klobenriegel 33 zwischen einer Verriegelungsstellung, in der der Klobenriegel 33 in die Klobenaufnahme 25 hineinragt und den Kloben 27 gegen eine Entnahme sichert, und einer Freigabestellung, in der der Klobenriegel 33 aus der Klobenaufnahme 25 zurückgezogen ist und den Kloben 27 für eine Entnahme freigibt, linear verschiebbar. Durch die Blattfeder 35 ist der Klobenriegel 33 in die Verriegelungsstellung vorgespannt.

Es hat sich gezeigt, dass es unter besonderen Umständen möglich sein könnte, dass ein in der Klobenaufnahme 25 aufgenommener, durch den Klobenriegel 33 an sich gesicherter Kloben 27 durch manipulative Zugbelastung manuell aus der Klobenaufnahme 25 herausgezogen werden kann, ohne dass hierzu der Schließzylinder 19 betätigt wird. Dies wird darauf zurückgeführt, dass unter Umständen Kräfte erzeugt werden können, die größer sind als die Zugkraft der Blattfeder 35, so dass der Klobenriegel 33 hierdurch in Richtung der Freigabestellung manipulativ verschoben werden kann.

Aus diesem Grund ist erfindungsgemäß vorgesehen, dass der Klobenriegel 33 mit Spiel in Richtung der Einführrichtung 61 in der Ausnehmung 43 aufgenommen ist, und dass an der entgegen der Einführrichtung 61 gerichteten Seite des Klobenriegels 33 im Bereich der Kontaktfläche des Klobenriegels 33 mit einer korrespondierenden Ringfläche der in dem Kloben 27 ausgebildeten Ringnut 31 ein Blockiervorsprung 49 (Fig. 3 und 4), insbesondere ein stufenförmiger Blockierabsatz 49, vorgesehen ist, wie insbesondere aus den Fig. 3a und 3b ersichtlich ist. Der Blockierabsatz 49 ist in der Verriegelungsstellung des Klobenriegels 33 damit außerhalb der Ausnehmung 43 und innerhalb der Klobenaufnahme 25 angeordnet.

In der entgegen der Einführrichtung 61 liegenden Anlageposition des Klobenriegels 33 an der die Ausnehmung 43 umgebenden Wand 51 (Fig. 4), wie sie von dem Klobenriegel 33 im Falle einer Zugbelastung auf den Kloben 27 entgegen der Einführrichtung 61 eingenommen wird, setzt daher der Blockierabsatz 49 beim Bewegung des Klobenriegels 33 aus der Verriegelungsstellung in Richtung der Freigabestellung auf dem einen ortsfesten Anschlag bildenden Öffnungsrand 63 der Ausnehmung 43 in der Klobenaufnahme 25 auf. Der Klobenriegel 33 kann dann nicht weiter in die Ausnehmung 43 verschoben werden. Somit kann ein manipulatives Herausziehen des Klobens 27 aus der Klobenaufnahme 25 ohne Betätigung des Schließzylinders 19, wie es vorstehend beschrieben ist, wirksam verhindert werden.

Vorzugsweise weist der Blockierabsatz 49 lediglich eine geringe Höhe in Richtung der Einführrichtung 61 von beispielsweise lediglich 0,2 mm auf. Falls bei einer regulären Freigabebetätigung durch den Schließzylinder 19 sich der Klobenriegel 33 zufällig in der vorgenannten Anlageposition befinden sollte, reichen bei dieser geringen Höhe geringste Bewegungen aus, damit sich der Klobenriegel 33 aus dieser Anlageposition löst, so dass der Betätigungskomfort für den Benutzer beim Entsperren des Rahmenschlosses letztlich nicht beeinträchtigt wird.

### Bezugszeichenliste

- 11: Basisabschnitt
- 13: Lagerschenkel
- 15: Aufnahmeschenkel
- 17: Schließbereich
- 19: Schließzylinder
- 21: Bügelriegel
- 23: Schlüssel
- 25: Klobenaufnahme
- 27: Kloben
- 29: Antriebsfortsatz
- 31: Ringnut
- 32: Spiralfeder
- 33: Klobenriegel
- 35: Blattfeder
- 37: Vorspannrichtung
- 39: Rundbügel
- 41: Handhabe
- 43: Ausnehmung
- 45: Koppelelement
- 47: Schließrichtung
- 49: Blockierabsatz
- 51: Wand
- 53: Sperrnut
- 57: Versteifungsfläche
- 59: Verbindungsniet
- 61: Einführrichtung
- 63: Öffnungsrand

## Patentansprüche

1. Rahmenschloss für ein Zweirad, mit einem Sperrriegel (39), welcher zwischen einer Schließstellung und einer Öffnungsstellung verstellbar ist, einer Klobenaufnahme (25) für einen Kloben (27) eines Sicherungsseils, und einem quer zur Einführrichtung (61) des Klobens (27) zwischen einer Verriegelungsstellung und einer Freigabestellung verschiebbar gelagerten Sicherungselement (33), das in einer in die Kloberiaufnahme (25) mündenden Ausnehmung (43) aufgenommen und in Richtung der Verriegelungsstellung vorgespannt ist, wobei in der Verriegelungsstellung das Sicherungselement (33) in die Klobenaufnahme (25) hineinragt und in der Freigabestellung aus der Klobenaufnahme (25) zumindest teilweise zurückgezogen ist, um den in der Klobenaufnahme (25) aufgenommenen Kloben (27) wahlweise gegen eine Entnahme zu sichern oder für eine Entnahme freizugeben, wobei das Sicherungselement (33) in Einführrichtung (61) spielbehaftet in der Ausnehmung (43) aufgenommen und eine durch Formschluss wirkende Blockiereinrichtung (49) vorgesehen ist, um in einer entgegen der Einführrichtung (61) liegenden Anlageposition des Sicherungselements (33) in der Ausnehmung (43) ein den Kloben (27) freigebendes Verschieben des Sicherungselements (33) aus der Verriegelungsstellung in die Freigabestellung zu blockieren,
**dadurch gekennzeichnet,**
**dass** die Blockiereinrichtung (49) einen an dem Sicherungselement (33), an der entgegen der Einführrichtung (61) gerichteten Seite des Sicherungselements (33), ausgebildeten Blockiervorsprung (49) umfasst, der in der Verriegelungsstellung in der entgegen der Einführrichtung (61) liegenden Anlageposition des Sicherungselements (33) einen ortsfesten Anschlag (63) hintergreift, um ein den Kloben (27) freigebendes Verschieben des Sicherungselements (33) aus der Verriegelungsstellung in die Freigabestellung zu blockieren.

2. Rahmenschloss nach Anspruch 1,
**dadurch gekennzeichnet,**
**dass** der Blockiervorsprung (49) stufenförmig ausgebildet ist

3. Rahmenschloss nach Anspruch 1 oder 2,
**dadurch gekennzeichnet,**
**dass** der Blockiervorsprung (49) eine Höhe von maximal 1 mm, bevorzugt von maximal 0,5 mm, besonders bevorzugt von maximal 0,3 mm, aufweist.

4. Rahmenschloss nach einem der Ansprüche 1 bis 3,
**dadurch gekennzeichnet,**
**dass** in der Verriegelungsstellung des Sicherungselements (33) der Blockiervorsprung (49) außerhalb der Ausnehmung (43) und innerhalb der Klobenaufnahme (25), insbesondere in eine in dem Kloben (27) ausgebildete Ringnut (31) eingreifend, angeordnet ist.

5. Rahmenschloss nach einem der Ansprüche 1 bis 4,
**dadurch gekennzeichnet,**
**dass** der Blockiervorsprung (49) im Bereich der Kontaktfläche des Sicherungselements (33) mit einer korrespondierenden Ringfläche einer in dem Kloben (27) ausgebildeten Ringnut (31) vorgesehen ist.

6. Rahmenschloss nach einem der Ansprüche 1 bis 5,
**dadurch gekennzeichnet,**
**dass** das Sicherungselement (33) als ein Flachteil aus Blech gefertigt ist weist an der in Richtung der Einführrichtung (61) gerichteten Seite eine dem Blockiervorsprung (49) gegenförmig ausgebildete Einbuchtung auf.

7. Rahmenschloss nach einem der Ansprüche 1 bis 6,
**dadurch gekennzeichnet,**
**dass** der ortsfeste Anschlag (63) als Teil einer die Ausnehmung (43) umgebenden Wand (51) ausgebildet ist.

8. Rahmenschloss nach einem der Ansprüche 1 bis 7,
**dadurch gekennzeichnet,**
**dass** der ortsfeste Anschlag (63) durch den Öffnungsrand (63) der Ausnehmung (43) in der Klobenaufnahme(25) gebildet ist.

## Claims

1. A frame lock for a two-wheeler having a locking bolt (39) which is adjustable between a closed position and an open position, having a bar receiver (25) for a bar (27) of a securing cable, and having a securing element (33) which is displaceably supported transversely to the direction of introduction (61) of the bar (27) between a locked position and a release position, which is received in a cut-out (43) opening into the bar receiver (25) and which is preloaded in the direction of the locked position, wherein the securing element (33) projects into the bar receiver (25) in the locked position and is at least partly retracted from the bar receiver (25) in the release position in order selectively to secure the bar (27) received in the bar receiver (25) against removal or to release it for removal, wherein the securing element (33) is received with clearance in the direction of introduction (61) in the cut-out (43) and wherein a blocking device (49) acting by shape matching is provided to block a displacement of the securing element (33) out of the locked position into the release position, said displacement releasing the bar (27), in a contact position of the securing element (33) disposed against the direction of introduction (61) in the cut-out (43),
**characterized in that**
the blocking device (49) comprises a blocking projection (49) which is formed at the securing element (33), at the side of the securing element (33) directed against the direction of introduction (61), and which engages behind a fixed-position abutment (63) in the locked position in the contact position of the securing element (33) disposed against the direction of introduction (61) in order to block a displacement of the securing element (33) out of the locked position into the release position, said displacement releasing the bar (27).

2. A frame lock in accordance with claim 1,
**characterized in that**
the blocking projection (49) is of step shape.

3. A frame lock in accordance with claim 1 or claim 2,
**characterized in that**
the blocking projection (49) has a height of a maximum of 1 mm, preferably of a maximum of 0.5 mm, particularly preferably of a maximum of 0.3 mm.

4. A frame lock in accordance with any one of the claims 1 to 3,
**characterized in that**
the blocking projection (49) is arranged outside the cut-out (43) and within the bar receiver (25), in particular engaging into a ring groove (31) formed in the bar (27), in the locked position of the securing element (33).

5. A frame lock in accordance with any one of the claims 1 to 4,
**characterized in that**
the blocking projection (49) is provided in the region of the contact surface of the securing element (33) with a corresponding ring surface of a ring groove (31) formed in the bar (27).

6. A frame lock in accordance with any one of the claims 1 to 5,
**characterized in that**
the securing element (33) is produced as a flat part from sheet metal and has an indentation formed in mating shape with the blocking projection (49) at the side directed in the direction of the direction of introduction (61).

7. A frame lock in accordance with any one of the claims 1 to 6,
**characterized in that**
the fixed-position abutment (63) is configured as part of a wall (51) surrounding the cut-out (43).

8. A frame lock in accordance with any one of the claims 1 to 7,
**characterized in that**
the fixed-position abutment (63) is formed by the opening margin (63) of the cut-out (43) in the bar receiver (25).

## Revendications

1. Antivol de cadre pour deux-roues, comportant un verrou (39) qui est mobile entre une configuration de fermeture et une configuration d'ouverture, un logement à goujon (25) pour un goujon (27) d'un câble d'arrêt, et un élément d'arrêt (33) monté mobile en translation entre une configuration de verrouillage et une configuration de libération transversalement à la direction d'introduction (61) du goujon (27), élément qui est logé dans un évidement (43) débouchant dans le logement à goujon (25) et qui est précontraint en direction de la configuration de verrouillage,
dans lequel
dans la configuration de verrouillage, l'élément d'arrêt (33) pénètre dans le logement à goujon (25), et dans la configuration de libération il est au moins partiellement retiré du logement à goujon (25), afin d'arrêter au choix le goujon (27), logé dans le logement à goujon (25), à l'encontre d'un enlèvement ou de le libérer pour un enlèvement,
l'élément d'arrêt (33) est logé dans le logement (43) avec jeu dans la direction d'introduction (61), et
il est prévu un dispositif de blocage (49) agissant par coopération de formes afin de bloquer une translation, libérant le goujon (27), de l'élément d'arrêt (33) hors de la configuration de verrouillage jusque dans la configuration de libération, dans une position d'appui de l'élément d'arrêt (33) dans l'évidement (43) qui est située en sens opposé à la direction d'introduction (61), **caractérisé en ce que**
le dispositif de blocage (49) comprend une saillie de blocage (49) réalisée sur l'élément d'arrêt (33) sur le côté de l'élément d'arrêt (33) dirigé en sens opposé à la direction d'introduction (51), saillie qui, dans la configuration de verrouillage, vient engager par l'arrière une butée (63) stationnaire, dans la position d'appui de l'élément d'arrêt (33) située en sens opposé à la direction d'introduction (61), afin de bloquer une translation de l'élément d'arrêt (33), libérant le goujon (27), hors de la configuration de verrouillage jusque dans la configuration de libération.

2. Antivol de cadre selon la revendication 1,
**caractérisé en ce que**
la saillie de blocage (49) est réalisée en forme de gradins.

3. Antivol de cadre selon la revendication 1 ou 2,
**caractérisé en ce que**
la saillie de blocage (49) présente une hauteur de 1 mm au maximum, de préférence de 0,5 mm au maximum, de manière particulièrement préférée de 0,3 mm au maximum.

4. Antivol de cadre selon l'une des revendications 1 à 3,
**caractérisé en ce que**
dans la configuration de verrouillage de l'élément d'arrêt (33), la saillie de blocage (49) est agencée à l'extérieur de l'évidement (43) et à l'intérieur du logement à goujon (25), en particulier de manière à s'engager dans une gorge annuaire (31) ménagée dans le goujon (27).

5. Antivol de cadre selon l'une des revendications 1 à 4,
**caractérisé en ce que**
la saillie de blocage (49) est prévue dans la zone de la surface de contact de l'élément d'arrêt (33) avec une surface annulaire correspondante d'une gorge annulaire (31) ménagée dans le goujon (27).

6. Antivol de cadre selon l'une des revendications 1 à 5,
**caractérisé en ce que**
l'élément d'arrêt (33) est fabriqué sous la forme d'une pièce plate en tôle et comprend sur le côté dirigé dans le sens de la direction d'introduction (61) une échancrure réalisée en forme complémentaire par rapport à la saillie de blocage (49).

7. Antivol de cadre selon l'une des revendications 1 à 6,
**caractérisé en ce que**
la butée stationnaire (63) est réalisée en tant que partie d'une paroi (51) entourant l'évidement (43).

8. Antivol de cadre selon l'une des revendications 1 à 7,
**caractérisé en ce que**
la butée stationnaire (63) est formée par le bord d'ouverture (63) de l'évidement (43) dans le logement à goujon (25).
